# FASCICULE DE BREVET EUROPEEN

(11) **EP 1 145 532 B1**
(45) Date de publication et mention de la délivrance du brevet: **09.11.2005**
(21) Numéro de dépôt: 99926583.8
(22) Date de dépôt: 01.07.1999
(51) Int. Cl.: H04M 1/00

(54) **SONNERIE POUR RADIOTELEPHONE A PUISSANCE ELEVEE**
WECKER FÜR MOBILTELEFON MIT ERHÖHTER LAUTSTÄRKE
METHOD AND SYSTEM FOR PRODUCING WHEN A CALL IS RECEIVED ON A STANDARD PORTABLE TELEPHONE, A SOUND SIGNAL AS POWERFUL AS A DOMESTIC TELEPHONE SET RINGING SIGNAL

(30) Priorité: 03.07.1998 FR 9808550; 10.08.1998 FR 9810242; 26.01.1999 FR 9900807
(43) Date de publication de la demande: 17.10.2001
(73) Titulaire: Tan Yuan Industrial, Ltd., Hong Kong (CN)
(72) Inventeur: TRAVERE, René, 75001 Paris (FR); FATER, Vladimir, 75012 Paris (FR)
(74) Mandataire: Grynwald, Albert
(86) Numéro de dépôt international: PCT/FR1999/001587
(87) Numéro de publication internationale: WO 2000/002360

(56) Documents cités:
- US-A- 5 025 467
- US-A- 5 404 391

## Description

La présente invention concerne un procédé et un système pour produire, lors de l'appel d'un radiotéléphone portable standard, un signal acoustique de puissance comparable à celle de la sonnerie d'un appareil téléphonique domestique.

Par "signal acoustique de puissance comparable à celle de la sonnerie d'un appareil téléphonique domestique", on entend un signal acoustique qui pourra être entendu de la plupart sinon de l'intégralité des pièces d'un local d'habitation ou d'un local de même dimension comportant plusieurs bureaux.

Les inventeurs ont constaté que les radiotéléphones mobiles sont des téléphones de proximité qui, par construction même, sont conçus pour déranger le moins possible leur environnement. Ainsi, leur puissance sonore, notamment celle de la sonnerie d'appel est volontairement limitée de telle sorte que pratiquement, seul le porteur du radiotéléphone est en mesure d'entendre le signal acoustique émis. En effet, la sonnerie des téléphones portables est par nature de faible puissance, leur encombrement réduit ne leur permet pas d'embarquer des sources d'énergie électrique de grande capacité. La sonnerie ne peut pas être entendue si l'utilisateur ne se trouve pas à proximité, ou si l'environnement sonore est encombré. En outre, il arrive que dans certaines parties de locaux, le réseau n'est pas capté, alors qu'en d'autres endroits des mêmes locaux, le réseau est présent. L'endroit où le téléphone portable doit être déposé dépend de la qualité de réception du réseau. Cet endroit n'est pas nécessairement celui où l'utilisateur désire se trouver. Par ailleurs et surtout, l'évolution de la culture du portable conduit les industriels à développer des portables de plus en plus léger, de plus en plus compact, de plus en plus individuel, de plus en plus confidentiel, bref de plus en plus intime. Le portable est lié à l'individu. Sa sonnerie ne pourra donc être entendue que dans une sphère de portée limitée autour de lieu où il se trouve. Certains portables possédant des vibreurs pourraient même se passer d'émettre une sonnerie.

Ce constat n'a pas découragé les inventeurs de leur projet. Ils ont imaginé qu'un radiotéléphone portable pourrait constituer un téléphone d'appoint, si ce n'est le téléphone principal, dans des lieux où le titulaire du radiotéléphone n'est pas tenu par les contraintes sonores vis-à-vis de l'environnement, par exemple, une résidence secondaire. En d'autres termes, les inventeurs se sont posés le problème de transformer le radiotéléphone portable en un téléphone fixe dont la sonnerie d'appel pourrait être entendue de toutes les pièces de l'endroit où se trouve le titulaire du radiotéléphone.

Ainsi, pour autant que ce problème puisse être résolu, il ne serait plus nécessaire que le titulaire porte en permanence le radiotéléphone sur lui dans les lieux où il séjourne longtemps. De plus, il lui serait alors possible de déposer le radiotéléphone mobile dans la zone de l'habitation où la réception GSM est la meilleure.

Les inventeurs ont pris conscience qu'il existe déjà un parc installé de radiotéléphones mobiles et qu'il est peu probable que les constructeurs de radiotéléphones mobiles reprennent et modifient les équipements vendus.

Il est acquis que les constructeurs doivent respecter des normes. Il faudra un certain temps pour que de nouvelles normes soient élaborées et pour concevoir des radiotéléphones susceptibles d'être utilisés de deux façons distinctes :
- d'une part, de manière discrète dans des lieux où ses nuisances sonores pourraient perturber l'environnement,
- d'autre part, de manière usuelle ainsi qu'un téléphone fixe, à la discrétion de l'utilisateur.

La réalisation de batteries, bas coût, faible poids, grande consommation, pour alimenter les sonneries d'appel ayant une puissance acoustique importante est un problème technologique complexe à résoudre.

Les inventeurs ont donc exclus, les solutions techniques consistant à modifier le radiotéléphone lui-même ou certains organes qui le composent.

Le document : EP 0423 773 A (SIEMENS AG OSTERREICH ; SIEMENS AG (DE)) décrit précisément la solution technique écartée par les inventeurs. Ce document décrit un système combinant :
- un téléphone mobile (MT) dans lequel est incorporé un dispositif de couplage mobile (MKE) et
- un socle (AV) comportant un dispositif de couplage fixe (SKE) avec le dispositif de couplage mobile (MKE).

Le socle contient une sonnerie complémentaire, relativement puissante. Le dispositif de couplage (MKE) contient une douille enfichable inulti-pôle pour le transfert de données et de la parole. Ainsi, il apparaît clairement que le téléphone mobile (MT) est conçu et contient des organes adaptés pour coopérer avec le socle (AV).

La mise en oeuvre d'une solution technique telle que celle décrite dans le document cité impliquerait que l'on modifie les radiotéléphones déjà vendus. Elle impliquerait aussi que les constructeurs adoptent de nouvelles normes et réalisent des radiotéléphones spécifiquement adaptés pour coopérer avec les socles contenant les sonneries complémentaires de puissance.

Le document cité ne concerne pas le problème posé et solutionné par la présente invention. Il ne décrit pas une solution pour s'adapter à un parc de radiotéléphones mobiles préexistant.

Le procédé selon l'invention permet de produire, lors de l'appel d'un radiotéléphone portable standard par une station émettrice, un signal acoustique de puissance comparable à celle de la sonnerie d'un appareil téléphonique domestique.

Le procédé selon l'invention comprend les étapes :
- de détecter de manière autonome du radiotéléphone, indirectement, l'appel de la station émettrice et de générer un signal de détection grâce à la détection d'une perturbation de l'environnement électromagnétique du radiotéléphone, cet environnement étant perturbé par les courants circulant dans les circuits électroniques du radiotéléphone détectant l'onde électromagnétique reçue et réagissant en retour,
- de déclencher, au moyen dudit signal de détection, l'émission d'un signal acoustique de puissance comparable à celle de la sonnerie d'un appareil téléphonique domestique,
de sorte que l'utilisateur du radiotéléphone standard est averti de l'appel entrant même s'il est situé à distance du radiotéléphone standard, et qu'il n'est pas nécessaire de modifier les circuits électroniques du radiotéléphone standard.

De préférence, le procédé selon l'invention comprend en outre l'étape d'émettre le signal acoustique au moyen d'un émetteur alimenté, directement ou indirectement, en énergie par une source domestique, notamment par un chargeur connecté au réseau électrique domestique et/ou une batterie rechargeable par un chargeur connecté au réseau électrique domestique.

Ainsi, le nombre des appels entrant donnant lieu à la production d'un signal acoustique de puissance élevée n'est pas limité par la capacité de la source d'énergie.

Avantageusement, selon une deuxième variante de réalisation, dans le cas où en position de veille le radiotéléphone est associé à un chargeur, pour détecter de manière autonome du radiotéléphone l'appel de la station émettrice, on détecte les variations du courant de charge dudit chargeur.

Avantageusement, selon une troisième variante de réalisation, dans le cas où le radiotéléphone comporte un vibreur destiné à signaler les appels à l'utilisateur, pour détecter de manière autonome du radiotéléphone l'appel de la station émettrice, on détecte les vibrations émises par ledit vibreur. On pourrait aussi détecter les vibrations acoustiques créées par la sonnerie du radiotéléphone lors de l'appel de la station émettrice.

Avantageusement, selon une quatrième variante de réalisation, pour détecter de manière autonome du radiotéléphone l'appel de la station émettrice, on détecte au moyen d'un circuit électronique indépendant l'appel émis par la station émettrice.

Ainsi, quelque soit la variante de réalisation considérée, il n'est pas nécessaire de modifier les circuits électroniques du radiotéléphone standard.

L'invention concerne également, un dispositif pour produire, lors de l'appel d'un radiotéléphone portable standard par une station émettrice, un signal acoustique de puissance comparable à celle de la sonnerie d'un appareil téléphonique domestique.

Le dispositif selon l'invention comprend :
- des moyens de détection pour détecter de manière autonome du radiotéléphone, indirectement, l'appel de la station émettrice grâce à la détection d'une perturbation de l'environnement électromagnétique du radiotéléphone, cet environnement étant perturbé par les courants circulant dans les circuits électroniques du radiotéléphone détectant l'onde électromagnétique reçue et réagissant en retour, et des moyens de production d'un signal de détection,
- des moyens pour déclencher au moyen dudit signal de détection, l'émission par un émetteur acoustique de puissance comparable à celle de la sonnerie d'un appareil téléphonique domestique,
de sorte que l'utilisateur du radiotéléphone standard est averti de l'appel entrant même s'il est situé à distance du radiotéléphone standard et qu'il n'est pas nécessaire de modifier les circuits électroniques du radiotéléphone standard.

Ainsi, l'utilisateur du radiotéléphone standard est averti de l'appel entrant même s'il est situé à distance du radiotéléphone standard. Le dispositif selon l'invention permet de séparer le portable de son utilisateur sans que celui-ci perde pour autant la possibilité de profiter de ses appels. Plus largement, il permet au portable de recouvrer la convivialité familiale ou sociale qui caractérise les qualités de tout téléphone d'installation fixe. De plus le dispositif selon l'invention permet d'entendre le portable dans une grande partie des locaux, même si seulement quelques secteurs de ces locaux sont couverts par le réseau.

De préférence, ledit émetteur acoustique est alimenté, directement ou indirectement, en énergie par une source domestique, notamment par un chargeur connecté au réseau électrique domestique et/ou une batterie rechargeable par un chargeur connecté au réseau électrique domestique.

Ainsi, le nombre des appels entrant donnant lieu à la production d'un signal acoustique de puissance élevée n'est pas limitée par la capacité de la source d'énergie.

Avantageusement, selon une première variante de réalisation, les moyens de détection pour détecter de manière autonome du radiotéléphone l'appel de la station émettrice comportent des moyens d'analyse des perturbations des champs électromagnétiques environnant le radiotéléphone.

Avantageusement, selon une deuxième variante de réalisation, dans le cas où le radiotéléphone est associé en position de veille à un chargeur, les moyens de détection pour détecter de manière autonome du radiotéléphone l'appel de la station émettrice comportent des moyens d'analyse du courant de charge dudit chargeur.

Avantageusement, selon une troisième variante de réalisation, dans le cas où le radiotéléphone comporte un vibreur destiné à signaler les appels à l'utilisateur, les moyens de détection pour détecter de manière autonome du radiotéléphone l'appel de la station émettrice comprennent des récepteurs sensibles aux vibrations émises par ledit vibreur. On pourrait aussi mettre en oeuvre des moyens d'analyse associés à des moyens de reconnaissance "vocale" pour détecter et reconnaître la vibration acoustique créée par la sonnerie du radiotéléphone lors de l'appel de la station émettrice.

Avantageusement, selon une quatrième variante de réalisation, les moyens de détection pour détecter de manière autonome du radiotéléphone l'appel de la station émettrice comportent un circuit électronique indépendant captant les signaux d'appel émis par la station émettrice.

Ainsi, quelque soit la variante de réalisation considérée, il n'est pas nécessaire de modifier les circuits électroniques du radiotéléphone standard.

On va maintenant décrire plus en détail certaines variantes de réalisation

### I. Cas des perturbations du champ électromagnétique.

Lorsque le radiotéléphone portable reçoit un appel de la station émettrice, son environnement électromagnétique est perturbé par l'onde électromagnétique reçue et/ou par les champs créés par les courants circulant dans les circuits électroniques du radiotéléphone détectant l'onde électromagnétique reçue et réagissant en retour.

En détectant ces perturbations de l'environnement électromagnétique créées par l'appel entrant, il est possible d'actionner une sonnerie puissante après avoir analysé et amplifié les signaux détectés.

### IL Cas où le radiotéléphone est associé en position de veille à un chargeur.

Lorsque le portable est en veille et en charge sur le courant électrique domestique et lorsque le portable est appelé, à ce moment précis se produit une chute de courant électrique dans le circuit de recharge des batteries du portable, ainsi que dans une partie des composants contenue dans le portable lui-même.

Le dispositif selon l'invention permet de capter, grâce à un détecteur, cette modification du courant électrique, et de l'appliquer à un amplificateur générateur d'ondes acoustiques se traduisant par une sonnerie puissante que l'on peut moduler à souhait.

Ce dispositif composé d'un détecteur amplificateur générateur de sonnerie peut être disposé dans un emplacement approprié, choisi parmi les configurations suivantes :
- le dispositif peut être intégré dans le chargeur lui-même qui contient habituellement le transformateur et le redresseur de courant,
- le dispositif peut être intercalé dans le circuit filaire de charge des batteries,
- le dispositif peut être contenu dans un bloc support du portable,
- le dispositif peut être séparé de l'ensemble portable chargeur et connecté par conducteurs à l'un des éléments cités ci-dessus.

### III. Cas où le radiotéléphone portable comporte un vibreur.

Dans le cas où le radiotéléphone portable comporte un vibreur, le dispositif selon l'invention comporte un détecteur 1 électronique de vibrations. Ce détecteur fournit un signal numérique ou analogique correspondant aux vibrations qu'il détecte.

Le dispositif comporte en outre des moyens de traitement informatiques 2 chargés d'analyser le signal fourni par le détecteur de vibrations afin de déterminer si ces vibrations proviennent du portable et, dans l'affumative , de générer une mélodie de sonnerie. Le dispositif peut être également équipé d'un dispositif externe (interrupteurs ou cavaliers) permettant de sélectionner une mélodie de sonnerie.

Le dispositif comporte aussi un amplificateur 3 connecté aux moyens de traitement informatique. Cet amplificateur est chargé d'amplifier la mélodie de sonnerie générée par les moyens de traitement informatique. Il peut également être équipé d'un potentiomètre permettant de régler le niveau sonore de la mélodie.

Un haut parleur 4, connecté à l'amplificateur, permet de restituer la sonnerie.

Une alimentation 5 fournit l'énergie électrique (la tension) nécessaire à chaque partie du système. Cette énergie peut être fournie par un bloc secteur, par des piles, ou par des batteries rechargeables. L'alimentation comporte un bouton marche/arrêt et un témoin de fonctionnement.

Le dispositif se présente sous la forme d'un boîtier plat sur lequel repose le portable.

Un dispositif comparable peut être mis en oeuvre pour détecter la vibration acoustique émise par la sonnerie du radiotéléphone, l'analyser et reconnaître par des techniques de reconnaissance vocale l'origine de cette vibration acoustique. Le dispositif peut alors émettre, ainsi que cela a été décrit ci-dessus, une sonnerie puissante destinée à l'utilisateur situé à distance.

### IV Cas d'un circuit électronique indépendant

Le dispositif peut être physiquement séparé, transportable, et non connecté à l'ensemble portable chargeur. Dans ce cas, le dispositif est composé d'un organe récepteur, léger et peu encombrant, comparable à celui du portable, et d'un organe générateur de sonnerie puissante. Ce dispositif indépendant, alimenté par des batteries rechargeables, est en liaison avec l'émetteur, tout comme le portable, par ondes électromagnétiques. Le dispositif a été initialisé lors de sa mise en service, exactement comme le portable. Quand le portable est appelé, qu'il soit en veille ou non, l'organe récepteur du dispositif est sollicité et commande le générateur de sonnerie qui retentit. Cette sonnerie s'arrête quand la communication est prise sur le portable, ou quand l'appel cesse, ou quand la messagerie vocale du portable s'enclenche.

L'utilisateur peut à souhait s'éloigner à toute distance du portable et être prévenu de tout appel, sans pour autant mobiliser le portable. Ainsi d'autres personnes peuvent l'utiliser. Si nécessaire, on utilise autant de dispositifs indépendants que l'on souhaite.

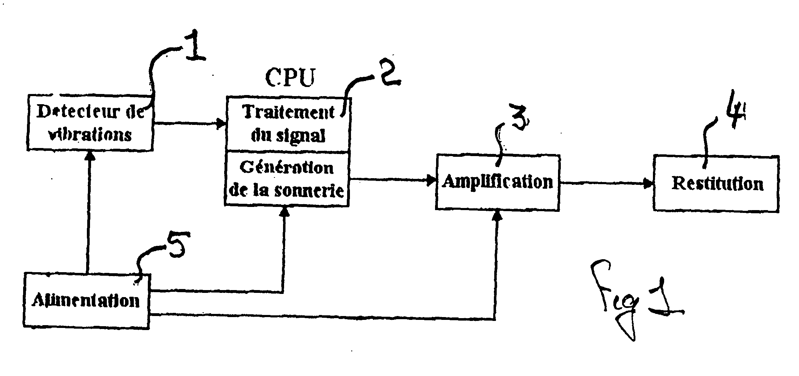

## Revendications

1. Procédé pour produire, lors de l'appel d'un radiotéléphone portable standard par une station émettrice, un signal acoustique de puissance comparable à celle de la sonnerie d'un appareil téléphonique domestique ; ledit procédé étant **caractérisé en ce qu'**il comprend les étapes :
- de détecter (1) de manière autonome du radiotéléphone, indirectement, l'appel de la station émettrice et de générer un signal de détection grâce à la détection d'une perturbation de l'environnement électromagnétique du radiotéléphone, cet environnement étant perturbé par les courants circulant dans les circuits électroniques du radiotéléphone détectant l'onde électromagnétique reçue et réagissant en retour,
- de déclencher, au moyen dudit signal de détection, l'émission d'un signal acoustique (4) de puissance comparable à celle de la sonnerie d'un appareil téléphonique domestique,
de sorte que l'utilisateur du radiotéléphone standard est averti de l'appel entrant même s'il est situé à distance du radiotéléphone standard, et qu'il n'est pas nécessaire de modifier les circuits électroniques du radiotéléphone standard.

2. Procédé selon la revendication 1, **caractérisé en ce qu'**il comprend en outre l'étape d'émettre le signal acoustique au moyen d'un émetteur alimenté (5), directement ou indirectement, en énergie par une source domestique, notamment par un chargeur connecté au réseau électrique domestique et/ou une batterie rechargeable par un chargeur connecté au réseau électrique domestique,
de sorte que le nombre des appels entrant donnant lieu à la production d'un signal acoustique de puissance élevée n'est pas limitée par la capacité de la source d'énergie.

3. Dispositif pour produire, lors de l'appel d'un radiotéléphone portable standard par une station émettrice, un signal acoustique de puissance comparable à celle de la sonnerie d'un appareil téléphonique domestique ; ledit dispositif étant **caractérisé en ce qu'**il comprend :
- des moyens de détection pour détecter de manière autonome du radiotéléphone, indirectement, l'appel de la station émettrice grâce à la détection d'une perturbation de l'environnement électromagnétique du radiotéléphone, cet environnement étant perturbé par les courants circulant dans les circuits électroniques du radiotéléphone détectant l'onde électromagnétique reçue et réagissant en retour, et des moyens de production d'un signal de détection,
- des moyens pour déclencher au moyen dudit signal de détection, l'émission par un émetteur acoustique de puissance comparable à celle de la sonnerie d'un appareil téléphonique domestique,
de sorte que l'utilisateur du radiotéléphone standard est averti de l'appel entrant même s'il est situé à distance du radiotéléphone standard et qu'il n'est pas nécessaire de modifier les circuits électroniques du radiotéléphone standard.

4. Dispositif selon la revendication 3, **caractérisé en ce que** ledit émetteur acoustique est alimenté, directement ou indirectement, en énergie par une source domestique (5), notamment par un chargeur connecté au réseau électrique domestique et/ou une batterie rechargeable par un chargeur connecté au réseau électrique domestique,
de sorte que le nombre des appels entrant donnant lieu à la production d'un signal acoustique de puissance élevée n'est pas limité par la capacité de la source d'énergie.

## Patentansprüche

1. Verfahren zum Erzeugen eines akustischen Signals einer Lautstärke, die mit der eines Weckers eines Haustelefonapparats vergleichbar ist, beim Anruf eines tragbaren Standard-Funktelefons von einer Sendestation; wobei dieses Verfahren **dadurch gekennzeichnet ist, daß** es die folgenden Stufen umfaßt:
- indirekt, selbständig durch das Funktelefon, Erfassen (1) des Anrufs der Sendestation und Generieren eines Anzeigesignals aufgrund des Erfassens einer Störung der elektromagnetischen Umgebung des Funktelefons, wobei diese Umgebung durch in den elektronischen Stromkreisen des Funktelefons umlaufende Ströme gestört wird, die die empfangene elektromagnetische Welle erfassen und darauf reagieren,
- Auslösen der Abgabe eines akustischen Signals (4), mittels dieses Anzeigesignals, mit einer Lautstärke, die mit dem Wecker eines Haustelefonapparats vergleichbar ist,
so daß der Anwender des Standard-Funktelefons auf den eingehenden Anruf aufmerksam wird, auch wenn er sich im Abstand zum Standard-Funktelefon befindet, und daß es nicht erforderlich wird, die elektronischen Stromkreise des Standard-Funktelefons zu verändern.

2. Verfahren gemäß Anspruch 1, **dadurch gekennzeichnet, daß** es ferner die Stufe enthält, das akustische Signal mittels eines Gebers abzugeben, der direkt oder indirekt von einer Quelle im Haus mit Energie versorgt wird (5), insbesondere von einer Ladeeinrichtung, die an das Stromnetz des Hauses angeschlossen ist, und/oder von einer Batterie, die von einer an das Stromnetz des Hauses angeschlossenen Ladeeinrichtung aufgeladen werden kann, so daß die Anzahl der eingehenden Anrufe, die Anlaß für die Erzeugung eines akustischen Signals mit erhöhter Lautstärke sind, nicht durch die Kapazität der Energiequelle eingeschränkt wird.

3. Vorrichtung zum Erzeugen eines akustischen Signals einer Lautstärke, die mit der eines Weckers eines Haustelefonapparats vergleichbar ist, beim Anruf eines tragbaren Standard-Funktelefons von einer Sendestation; wobei diese Vorrichtung **dadurch gekennzeichnet ist, daß** sie umfaßt:
- Erfassungsmittel zum indirekten, selbständigen Erfassen des Anrufs der Sendestation durch das Funktelefon aufgrund des Erfassens einer Störung der elektromagnetischen Umgebung des Funktelefons, wobei diese Umgebung durch in den elektronischen Stromkreisen des Funktelefons umlaufende Ströme gestört wird, die die empfangene elektromagnetische Welle erfassen und darauf reagieren; sowie Mittel zur Erzeugung eines Anzeigesignals,
- Mittel zum Auslösen der Signalabgabe eines akustischen Gebers mit einer Lautstärke, die mit der eines Weckers eines Haustelefongeräts vergleichbar ist, mittels dieses Anzeigesignals,
so daß der Anwender des Standard-Funktelefons auf den eingehenden Anruf aufmerksam wird, auch wenn er sich im Abstand zum Standard-Funktelefon befindet, und daß es nicht erforderlich wird, die elektronischen Stromkreise des Standard-Funktelefons zu verändern.

4. Vorrichtung gemäß Anspruch 3, **dadurch gekennzeichnet, daß** der akustische Geber direkt oder indirekt mit Energie aus einer Quelle im Haus (5) versorgt wird, insbesondere von einer Ladeeinrichtung, die an das Stromnetz des Hauses angeschlossen ist, und/oder von einer Batterie, die von einer an das Stromnetz des Hauses angeschlossenen Ladeeinrichtung aufgeladen werden kann,
so daß die Anzahl der eingehenden Anrufe, die Anlaß für die Erzeugung eines akustischen Signals mit erhöhter Lautstärke sind, nicht durch die Kapazität der Energiequelle eingeschränkt wird.

## Claims

1. A method for producing, during the call by a transmitting station of a standard portable radiotelephone, an acoustic signal of a power comparable to that of the ring of a home telephone apparatus; said method being **characterized in that** it comprises the steps:
- of detecting (1) in an autonomous manner from the radiotelephone, indirectly, the call from the transmitting station and of generating a detection signal thanks to the detection of a perturbation of the electromagnetic environment of the radiotelephone, this environment being disturbed by the currents which circulate in the electronic circuits of the radiotelephone detecting the received electromagnetic wave and reacting in return,
- of triggering, by means of said detection signal, the transmission of an acoustic signal (4) of a power comparable to that of the ring of a home telephone apparatus,
so that the user of the standard radiotelephone is informed of the incoming call even if he is situated at a distance from the standard radiotelephone, and it is not necessary to modify the electronic circuits of the standard radiotelephone.

2. A method according to claim 1, **characterized in that** it comprises in addition the step of transmitting the acoustic signal by means of a transmitter which is powered (5), directly or indirectly, by a home source, more particularly by a charger connected to the home electric network and/or a chargeable battery by a charger connected to the home electric network,
so that the number of incoming calls which give rise to the generation of an acoustic signal of a high power is not limited by the capacity of the energy source.

3. A device for producing, during the call by a transmitting station of a standard portable radiotelephone, an acoustic signal of a power comparable to that of the ring of a home telephone apparatus; said device being **characterized in that** it comprises:
- detecting means for detecting autonomously from the radiotelephone, indirectly, the call of the transmitting station thanks to the detection of a perturbation of the electromagnetic environment of the radiotelephone, this environment being disturbed by the currents which circulate in the electronic circuits of the radiotelephone detecting the received electromagnetic wave and reacting in return, and means for producing a detection signal,
- means for triggering by means of said detection signal, the transmission by an acoustic transmitter of a power comparable to that of the ring of a home telephone apparatus,
so that the user of the standard radiotelephone is informed of the incoming call, even if he is situated at a distance from the standard radiotelephone and it is not necessary to modify the electronic circuits of the standard radiotelephone.

4. A device according to claim 3, **characterized in that** said acoustic transmitter is powered, directly or indirectly, by a home source (5), more particularly by a charger connected to the home electric network and/or a rechargeable battery by a charger connected to the home electric network,
so that the number of incoming calls which give rise to the production of an acoustic signal of a high power is not limited by the capacity of the energy source.
